# EUROPEAN PATENT APPLICATION

(11) **EP 1 326 373 A2**
(43) Date of publication of application: **09.07.2003**
(21) Application number: 02293092.9
(22) Date of filing: 13.12.2002
(51) Int. Cl.: H04L 12/24

(54) **Method of invoking polymorphic operations in statically typed language**

(30) Priority: 19.12.2001 US 21629
(71) Applicant: Alcatel Canada Inc., Kanata, Ontario K2K 2E6 (CA)
(72) Inventor: Mann, Robert Alexander, P.O.Box 127., CARP, Ontario KOA 1LA (CA); Best, Michael, Ottawa, Ontario K1S 1R2 (CA); Abu-Hamdeh, Rateb, Kanata, Ontario K2l 3W9 (CA); D'Entremont, Jules Robert, Nepean, Ontario K2G 5S9 (CA); Jorgensen, Peter Kaj, Nepean, Ontario K2G 4L1 (CA); Sadasivan, Ashok, Ottawa, Ontario K1G OE7 (CA); Ensing, Karen, Carp, Ontario KOA 1LO (CA); Holierhoek, Hubert, Kinburn., Ontario KOA 1HO (CA)
(74) Representative: Feray, Valérie

(57) **Abstract**

A new architecture for deploying network management and service provisioning solutions is provided. The new architecture includes the provision of a framework implementing a software development methodology for coding complex software applications relating to network management and service provisioning. The software development methodology results in software application code that is easy to: understand, debug, extend, test, and deploy while still being efficient when used in real time. The methodology includes the coding, compiling and linking of a single managed object class. The managed object class is used to model and represent different data network entities in accordance with attributes held therein. The methodology further makes use of a network management and service provisioning specific grammar used by a parser associated with the framework to read a body of attribute files associated with the data network entities. The interpretation of the contents of the attribute files is performed by hierarchical lexical analyzer which when encountering an enabling technology specific directive, the directive is interpreted by a corresponding enabling technology specific lexical analyzer stub. Provisions are made for the run-time definition of methods implementing polymorphic characteristics although using a statically typed implementation. The advantages provided by the software development methodology are derived from application code that is easy to: understand, debug, extend, test, and deploy while still being efficient when used in real time.

## Description

The invention relates to management and provisioning of data networks, and in particular to methods of implementing data network management and provisioning solutions.

In the field of data network management, data transport networks are made up of a collection of managed data transport equipment. Data services are provisioned over the managed data transport equipment.

In a competitive market place, due to a recent explosive technological development, the network management and service provisioning task is complicated by many factors including: multiple data network equipment vendors having multiple approaches in implementing the data network equipment; a multitude of data transport technologies, with each vendor specializing in a sub-group of the multitude of data transport technologies; a multitude of network management and service provisioning protocols, with each vendor implementing only a sub-group of the multitude of network management and service provisioning protocols; a multitude of auxiliary network management and service provisioning equipment employing yet another multitude of network management and service provisioning technologies; etc.

Data transport equipment includes, but is not limited to: data switching equipment, routers, bridges, access nodes providing a multiplexing function, Remote Access Servers (RAS), distribution nodes providing a demultiplexing function, Customer Premise Equipment (CPE), etc. with next generation data transport equipment in development.

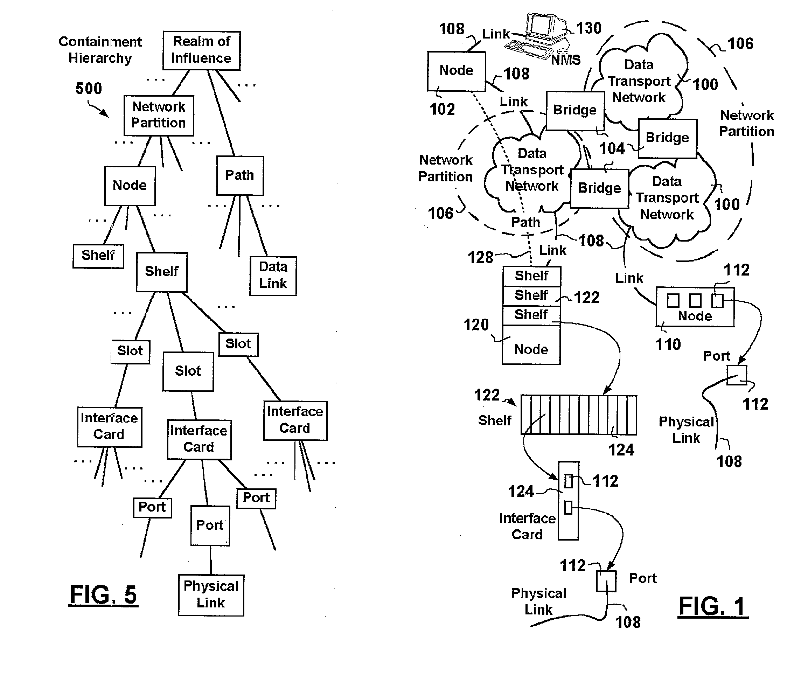

With regards to data network equipment, for example data switching nodes schematically shown in FIG. 1, a vendor may chose to implement an integral device 110 having a data switching processor and a group of ports 112, while another vendor may chose a customizable implementation of a data switching node 120 including: a switching fabric, an equipment rack divided into shelves, each shelf 122 having slot connectors for connection to interface cards, each interface card 124 having at least one port 112. Although conceptually the two the data switching nodes 110 and 120 provide the same data switching function, each implementation is adapted for a different environment: the former data switching node 110 is more adapted to enterprise solutions as a private data network node, perhaps further adapted to enable access to public data services; while the latter data switching node 120 is better adapted for high data throughput in the core of public data transport networks. Typically the former (110) implements a small number of data transport protocols while for the latter (120), data transport protocols are implemented on interface cards 124 and/or ports 112 - providing for a flexible deployment thereof.

Data transport technologies include: electrical transmission of data via copper pairs, coaxial cable, etc: optical transmission of data via optical cables; free space optical interconnects, etc.; wireless transmission of data via radio modems, microwave links, wireless Local Area Networking (LAN), etc.; with next generation data transport technologies under development.

Data transport protocols used to convey data between data transport equipment includes: Internet Protocol (IP), Ethernet technologies, Token-Ring technologies, Fiber Distributed Data Interface (FDDI), Asynchronous Transmission Mode (ATM), Synchronous Optical NETwork (SONET) transmission protocol, Frame Relay (FR), X-25, Time Division Multiplexing (TDM) transmission protocol, Packet-Over-SONET (POS), Multi-Protocol Label Switching (MPLS), etc. with next generation data transport protocols in development.

The physical data network equipment alluded to above is part of larger body of managed data network entities enabling the provision of data services. The data network entities also include, but are not limited to: logical ports, logical interfaces, end-to-end data links, paths, virtual circuits, virtual paths, etc.

Network management and service provisioning enabling technologies include, but are not limited to: Simple Network Management Protocol (SNMP), Common Management Information Protocol (CMIP) etc.; as well as devices: special function servers, centralized databases, distributed databases, relational databases, directories, network management systems (NMS), etc. with next generation devices and technologies under development.

Network management and service provisioning solutions include Network Management Systems (NMS) enabled via special purpose software applications coded to configure and control the above mentioned data network entities. Such software applications include, but are not limited to: inventory reporting, configuration management, statistics gathering, performance reporting, fault management, network surveillance, service provisioning, billing & accounting, security enforcement, etc.

It is a daunting task to provide network management and service provisioning solutions taking into account the permutations and combinations of the elements presented above. Prior art approaches to providing network management and service provisioning solutions includes the coding of hundreds of software applications with knowledge of hundreds of data networking entities using tens of data transmission and network management protocols.

Coding, deploying, maintaining, and extending such software applications for network management and service provisioning has been and continues to be an enormous undertaking as well as an extremely complex procedure. Such software applications require a large number of man-hours to create, frequently are delivered with numerous problems, and are difficult to modify and/or support. The difficulty in creating and supporting large applications is primarily due to the inability of existing software development paradigms to provide a simplification of the software development process. In accordance with current coding paradigms, the complexity of the software applications has been shown to increase as an exponential function of the number of different operations that are expected to be performed. Large programming efforts suffer in terms of reasonable performance, reliability, cost of development, and reasonably long development cycles.

Object Oriented Programming (OOP) attempts to improve productivity whenever a problem can be simplified by decomposing it into a set of black-box objects. Object oriented programming depends heavily upon the benefits of data hiding, inheritance, and polymorphism to simplify software design. If a network management and service provisioning solution cannot be subdivided into objects, object oriented programming does not offer significant productivity improvements. Moreover, heavy reliance on object oriented programming to achieve compact code intending to reduce the size of software applications and perhaps development time, suffers from deeply nested function calls which creates a processing overhead leading to inefficient code. Deep nesting of function calls obscures the implementation paradigms used; thereby negatively impacting code debugging, code maintenance, and further development thereof. As applied to the implementation of network management and service provisioning solutions, object-oriented techniques call for the use of a large number of base classes from which hundreds of sub-classes are derived in a pre-compiled linked-in monolithic class hierarchy to code knowledge of hundreds of data networking entities. Changes to any part of such implemented solution involves re-compiling and re-linking the monolithic class hierarchy.

Prior art efforts including: Preside™ by Nortel Networks Corp., IP Manager™ by Cisco Systems Inc., OneVision Management System™ by Lucent Technologies Inc., NetProvision Activator by Syndesis Limited, Resolve 2.1 by Orchestream Holdings Plc., and others, capture the properties, associations, relationships, functionality and management of data network entities in class definitions, as well as methods of interaction with network management and service provisioning devices using specific network management and service provisioning technologies. These efforts are all laudable but at the same time are subject to all of the above mentioned factors making it difficult to improve productivity in the development and maintenance of such complex software applications for network management and service provisioning.

A prior art United States Patent 5,491,796 entitled "APPARATUS FOR REMOTELY MANAGING DIVERSE INFORMATION NETWORK RESOURCES" which issued on February 13,1996 to Wanderer et al. describes a method of coding and organizing software application code into compilable device specification files to map an object oriented software application architecture to a relational database which only provides a very specific implementation for a specific remote management system. Although inventive, the coded routines in the device specification files, just as the prior art methods described above, capture the properties, associations, relationships, functionality and management of data network entities in class definitions, as well: as methods of interaction with network management and service provisioning devices using specific network management and service provisioning technologies. The resulting solution is still provided via large monolithic software applications without support for persistent storage.

One object of the present invention is to provide a network management and service provisioning environment in order to devise improved methods of software application code development and maintenance taking into account the above mentioned complexities.

More precisely, the invention provides a network management and service provisioning environment comprising a framework, the framework including:
- an implementation of a single managed entity object class, the single managed entity object class being run-time derivable via type derivation into a hierarchy of managed entity object types minimizing the need to re-code and re-compile framework software application code in support of new managed entity object types;
- a registry for run-time registration of at least one plug-in brokering access to network management and service provisioning enabling technologies;
- a parser for processing at least one managed data network entity specification;
- a dictionary holding a roster of function names of registered functions, the function defining methods associated with derived entity object types;
- a generic lexical analyzer interpreting at least one directive; and
- an interpreter for processing messages received from at least one network management and service provisioning software application
wherein a separation is achieved between managed entities, enabling technologies and software applications, the separation enabling independent development, maintenance and troubleshooting in providing network management and service provisioning solutions.

Thus, the environment according to the invention includes a framework implementing a software development methodology for coding complex software applications relating to network management and service provisioning. The software development methodology results in software application code that is easy to: understand, debug, extend, test, and deploy while still being efficient when used in real time. The methodology includes the coding, compiling and linking of a single managed object class. The managed object class is used to model and represent different data network entities in accordance with attributes held therein. The methodology further makes use of a network management and service provisioning specific grammar used by a parser associated with the framework to read a body of attribute files associated with the data network entities. The interpretation of the contents of the attribute files is performed by hierarchical lexical analyzer which when encountering an enabling technology specific directive, the directive is interpreted by a corresponding enabling technology specific lexical analyzer stub. Provisions are made for the run-time definition of methods implementing polymorphic characteristics although using a statically typed implementation. The advantages provided by the software development methodology are derived from application code that is easy to: understand, debug, extend, test, and deploy while still being efficient when used in real time.

The advantages of the present invention are derived from an improved ability to add new functionality in support of improved network management and service provisioning solutions to support new data network entities as well as from an ability to define, at run-time, methods implementing polymorphic characteristics although using a statically typed implementation. This improved ability comes from a reduction in the development effort required to achieve these objectives. The development effort is reduced because the work required in developing and/or updating part of the network management and service provisioning solution is isolated. This provides improved ability for developers to work independently, simplifying verification efforts and reducing regression testing efforts. The independent maintenance and development of code provides an improved ability to develop and troubleshoot new functionality in parallel.

In accordance with another aspect of the invention a network management and service provisioning apparatus using the framework is also provided.

In accordance with yet another aspect of the invention, a method of providing a network management and service provisioning solution is presented. The method comprises a sequence of steps. At least one plug-in brokering access to at least one network management and service provisioning enabling technology is registering with a framework providing the network management and service provisioning solution. At least one managed data network entity specification loaded by the framework is parsed. A single managed entity object class is derived into a managed entity object type hierarchy of managed entity object types via type derivation. And, at least one message received by the framework from at least one network management and service provisioning software application is processed. The framework acts as an enabler separating managed data network entities, enabling technologies and software applications, as well as a facilitator therebetween in providing the network management and service provisioning solution.

The features and advantages of the invention will become more apparent from the following detailed description of the preferred embodiments with reference to the attached diagrams wherein:
FIG. 1 shows a schematic diagram showing data network elements implementing connected data transport networks;
FIG. 2 shows a schematic diagram showing elements implementing a network management and service provisioning solution in accordance with a preferred embodiment of the invention;
FIG. 3 shows a schematic diagram showing a managed entity object hierarchy used in providing the network management and service provisioning solution in accordance with the preferred embodiment of the invention;
FIG. 4 shows a flow diagram showing steps of an interworking process facilitated in accordance with an exemplary implementation of the invention;
FIG. 5 shows a schematic diagram showing an managed entity containment hierarchy used in providing the network management and service provisioning solution in accordance with the preferred embodiment of the invention; and
FIG. 6 shows a schematic diagram showing the framework facilitating the interaction between interworking software applications and managed object type instances in accordance with the preferred embodiment of the invention. It will be noted that in the attached diagrams like features bear similar labels. FIG. 1 is a schematic diagram showing data network elements implementing connected data transport networks.

Data network nodes 102, 110, 120 are physically interconnected in the data transport network 100 via physical links 108. Data transport networks 100 may be bridged via bridge data network nodes 104 to enable data exchange therebetween. Connected data transport networks 100 can be grouped defining areas of focus and influence for the purposes of network management and service provisioning, known as network partitions 106.

Physical links 108 provide Open Systems Interconnection (OSI) Layer-1 connectivity between data network nodes 102/104/110/120 physically conveying data for OSI Layer-2 data links between nodes 102/110/120 end-to-end. A Layer-2 data link may be provisioned over at least one physical data link 108 - the sequence of physical data links 108 used representing an OSI Layer-3 path 128.

Network management and service provisioning is typically performed with the aid of at least one Network Management System (NMS) 130 connected to at least one node 102 associated with a data transport network 100.

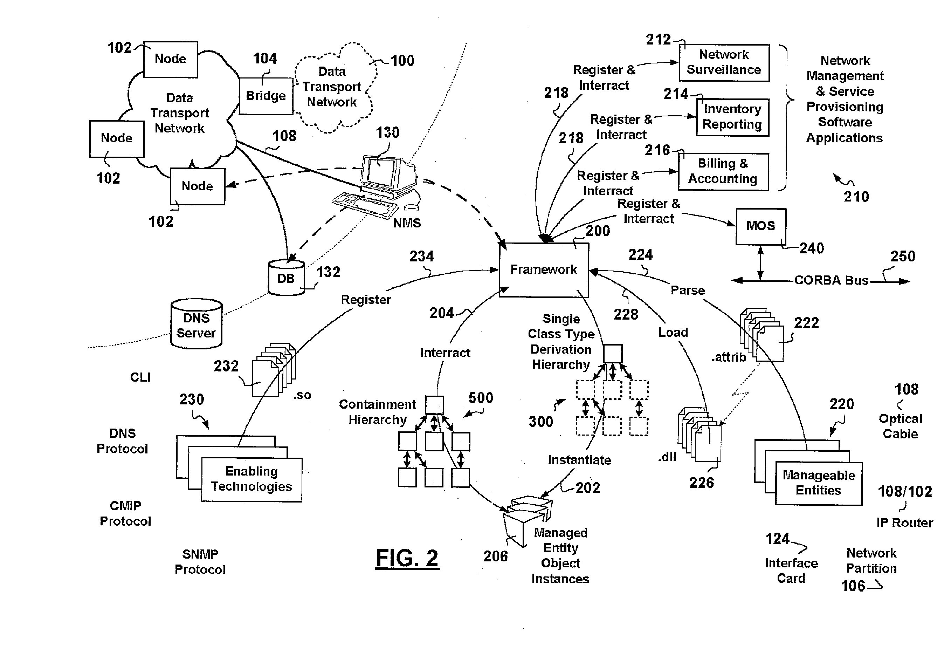

FIG. 2 is a schematic diagram showing elements implementing a network management and service provisioning solution.

In accordance with a preferred embodiment of the invention, a framework 200 is provided. The framework 200 may include a combination of hardware and software application code. The framework 200 facilitates the implementation of a software development methodology for coding complex software applications 210 relating to network management and service provisioning.

The framework 200 implements a new architecture for providing network management and service provisioning solutions. The new architecture categorizes the above presented elements into:
- Manageable data network entities 220 representative of field installed managed data network entities to be configured and controlled in providing network management and service provisioning solutions. The managed entities include:
   i. Physical data network equipment installed in the field such as: nodes 102/104, routers, switches, hubs, OC-3 links 108, etc., and
   ii. Logical data network entities associated with data network equipment installed in the field such as: network partitions 106, paths 128, virtual circuits, virtual routers etc.;
- Network management and service provisioning software applications 210 used to configure and control the manageable data network entitles 220. The software applications 210 include as mentioned above: inventory reporting 214, configuration management, statistics gathering, performance reporting, fault management, network surveillance 212, service provisioning, billing & accounting 216, security enforcement, etc.;
- Network management enabling technologies 230 providing interaction between the manageable entities 220 and, logical as well as field installed physical managed data network entities. Enabling technologies 230 include:
   i. Data network management and service provisioning protocols: SNMP, CMIP, CLI, DNS, etc., and
   ii. Data network management and service provisioning devices: databases, DNS servers, etc.

The interaction may be command driven as specified by the software application 210, as well as event driven as a current state of the managed data transport network(s) in the realm of management changes.

The enabling technologies 230 include support for a concept known as "persistence". Each data network entity including data network equipment has an associated group of parameters. These parameters either have an effect on the operation of the data network entity or label the data network entity. The persistence concept encompasses the storage of, access to, reading, writing, modifying, synchronization/reconciliation, etc. of persistence parameters to control the operation of data network entities.

The persistence parameters can be stored in a network management and service provisioning database 132, as well as in registers associated with the managed physical data network equipment installed in the field. The persistence access to, reading of, writing of, modification of these parameters is provided via the data network management and service provisioning protocols mentioned above. Persistence reconciliation and synchronization is performed between a persistence database and a persistence value held in a volatile register ensuring a correct record keeping thereof, fast access to the persisted information and backup thereof. Distributed storage of persistence information is also used in reconfiguring data network equipment subsequent to network failures.

The persistence concept also encompasses special persistence types such as: constant persistence which can only be initialized but not modified or written to subsequently; as well as derived persistence which is not stored but rather calculated from other persistence values when needed.

Further information regarding persistence entity support is provided in co-pending U.S. Patent Application bearing Attorney Docket Number 11922-US filed on even date entitled "NETWORK MANAGEMENT SYSTEM ARCHITECTURE" which is incorporated herein by reference.

Coding techniques are used in support of the preferred software development methodology enable on-demand loading of enabling technology specific object code. These coding techniques implement what are known in the art as software application plug-ins such as, but not limited to: SNMP plug-ins, CMIP plug-ins, CLI plug-ins, database plug-ins, etc. The plug-ins are provided as shared object code library (.so) files 232 which register 234 with the framework 200 for on-demand loading thereof. The plug-ins 232 capture data and methods necessary to interact with actual enabling technology entities (databases, registers, etc.) Each plug-in shared library (.so) file 232 contains a coded description of the functionality it is capable to provide.

In accordance with the preferred embodiment of the invention, a single abstract managed entity class is implemented in the framework 200 to model all manageable data network entities 220. The single managed entity class implementation includes generic methods to all manageable data network entities such as, but not limited to: set (attribute) value, get (attribute) value, etc. as well as a generic "invoke" method to perform operations on instantiated objects 206.

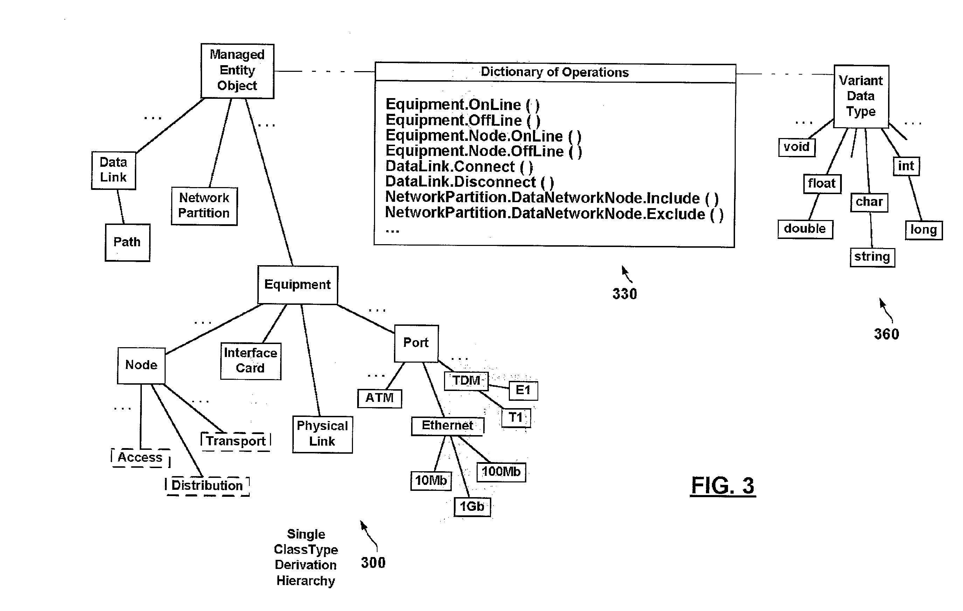

The single managed entity class is used, via type derivation, to define a single-class type derivation hierarchy 300 of (concrete) manageable object types. FIG. 3 is a schematic diagram showing an exemplary managed entity object hierarchy used in providing a network management and service provisioning solution. The single-class modeling of the manageable entities 220 provides for a flexible implementation of network management and service provisioning solutions without the need to re-code and re-compile the framework 200 application code and the software applications 210 to support newly added manageable data network entities 220 - as these are developed.

In accordance with the preferred embodiment of the invention, the derivation of the abstract single managed entity class into the single-class type derivation hierarchy 300 is preferably enabled by coding the abstract single managed entity class to be defined by a group of associated attributes. A human-readable attribute file 222 is provided for each manageable data network entity type 220. An additional dynamically linked library (.dll) file 226 corresponding to each manageable data network entity type 220 provides an implementation of methods to be used in interacting therewith. The software development methodology provides a reduction in some files used in implementing the presented network management and service provisioning solution from six files used by prior art methods to two files.

In accordance with the invention, each human-readable attribute file 222 gathers the particulars of a corresponding managed entity object type including the managed entity object type inheritance specifications thereof in a self-contained manner. Each attribute file 222 further specifies data and relationships. Directives defining a grammar are used in the attribute files 222 to specify particulars of the corresponding managed entity object type. The corresponding .dll file 226, when used, gathers all methods that can be invoked on the associated managed entity object type in a self contained manner. Each .dll file 226 is a stub of loadable object code implementing managed entity object type specific methods.

In deriving a managed entity object type from the single managed entity class, each attribute file 222 makes use of an "entity" directive specifying the inheritance. For example the human-readable directive:
entity [abstract | concrete] derivedType: parentType1 [parentType2, ...] is used, where the "derivedType" managed entity object: type is derived from the "parentType" managed entity object type described perhaps in another attribute file 222. Multiple inheritance is enabled via the specification of additional parentTypes. A facility may be provided for specifying whether the derived managed entity object type represents an abstract or concrete object type.

In setting attributes the following directive is used:
attr [ constant ] dataType attributeName [ = <initial value> ]
specifying the specific "attributeName" and the attribute's "dataType" "integer". A facility may be provided for initializing the attribute to an initial value. Another facility may be provided for specifying whether the attribute is constant or not.

In accordance with the invention, specifying managed object entity type functionality in the corresponding attribute file 222 may include the declaration of at least one operation to be invoked. The declaration of each operation is a logical interface (signature) of the corresponding method. The declaration of the operation specifies parameter types, a return type and errors that the operation may report. An "operation" directive is used for registering, with the framework 200, methods implementing functionality to be provided by the managed entity object type instances 206. The operation directive has the following grammar:

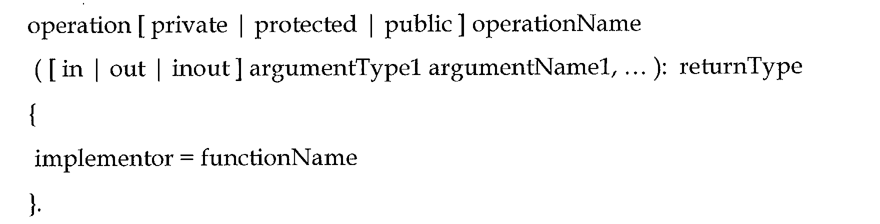

A visibility of the operation can be specified as, but not limited to: "private", "protected", "public". The operation having a name specified by "operationName" as well as a group of arguments "argumentNameX" each having a specified, "argumentType". The arguments are preferably passed by value. The specification of argument types enables argument type-checking on the arguments prior to as well as after the execution of the corresponding method. The passing of arguments by value provides for implementation between software applications 210 and the manageable entities 220. Further, the implementation of side-effects call for the specification of a direction for each attribute in the invocation of the operation at run time. A reduction of processing overheads in invoking methods is attained by not sending "out" attributes on invocation as well as not returning "in" attributes after the execution of the method. The method, after the execution thereof, may return a value having a "returnType". Return values used by methods having pass-by-value arguments typically report on the success attained by the method invocation. Each declared operation is implemented by a function in the corresponding .dll file 226. The function is specified as the "implementor" and the specified "functionName" corresponds to a function implementation in the .dll file 226 having the same name specified in a symbol table of the .dll file 226. More than one operation may be declared in the attribute file 222.

Operations declared for a particular managed entity object type are inherited by managed entity object types derived therefrom. Preferably all operations are implemented as free functions having a global scope. Name spaces are used in specifying the function name implementing the operation. The declared operations corresponding to derived managed entity object types are tallied up in a dictionary of operations which is made available to the software applications 210.

In accordance with the invention, the same subsequent operation may be declared more than once, in the managed entity object type hierarchy, overriding previously declared operations with respect to an ancestor managed entity object type. The subsequent operation is inherited only in an inheritance tree derived from the managed entity object type for which the subsequent operation was declared. Polymorphism is implemented by looking-up each operation as it is invoked in the dictionary of operations. An example of a dictionary having polymorphic OnLine and OffLine operations is shown at 330 in FIG. 3.

In accordance with the preferred embodiment of the invention, the coding of the functions implementing the declared operations includes the use of a generic function declaration to ensure a standard signature in the symbol table of the corresponding .dll file. In order to support the generic function declaration, a variant data type is provided. All other concrete data types are derived from the variant data type. An exemplary data type derivation hierarchy 360 is presented in FIG. 3 which includes, but is not limited to derived data types such as: integer, float, double, long, char, etc. The data types derivation hierarchy 360 may be extended via directives specified in the attribute files 222 or via software application 210 directives.

The following represents an exemplary generic function declaration:
attributeValue functionName (managedEntityInstance,
vector attributeValue arguments [, context ] )
where the generic "attributeValue" variant data type is used for the arguments of the function declaration as well as for any return values. The arguments are passed as a packed data structure such as a "vector". Other packed data structures may be used such as but not limited to: arrays, etc. A "managedEntityInstance" is provided and specifies the managed entity object type instance on which the operation is to be performed, ("this"). Optionally a "context" specifies the invocation context of the operation.

In accordance with the preferred embodiment of the invention, the software applications 210 are also coded in a general fashion implementing the functionality provided while only making reference to manageable data network entities 220 at high level abstract implementation. Specific information regarding manageable data network entities 220 is held by the framework 200 which instantiates 202, at run-time, and provides interaction 204 with, instances of managed object entities 206. The software applications 210 register 218 with the framework 200 which augments the functionality thereof in providing interaction with the instances 206 of specific manageable entities 220 and the methods associated therewith.

In accordance with the preferred embodiment of the invention, the facilities provided by the framework 200 are extended to other software applications developed employing other software coding methodologies via a Managed Object Server (MOS) 240 associated with a Common Object Request Broker Architecture (CORBA) bus 250. The specific implementation of the MOS 240 used, parallels that of a software application 210. Just like a software application 210 the MOS 240 registers with the framework 200.

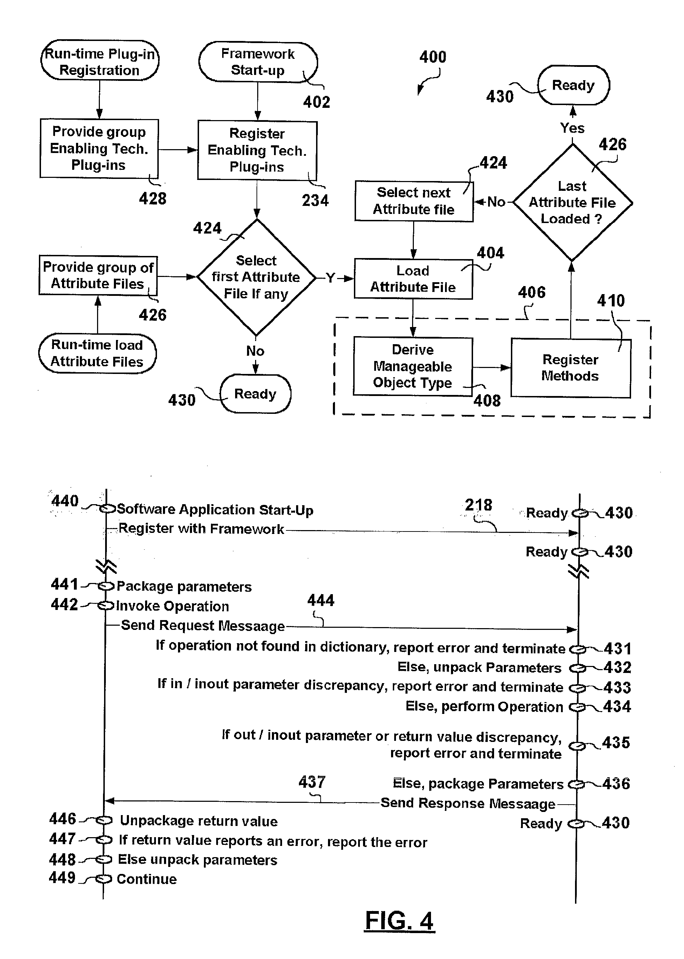

FIG. 4 is a flow diagram showing, in accordance with an exemplary implementation of the invention, steps of an interworking process 400 facilitated by the framework 200.

On start-up 402, the framework 200 loads-up the shared library (.so) files 232 registering 234 the enabling technology plug-ins 230. The attribute files 222 are also loaded-up 404 and processed 406 by the framework 200. In processing 406 an attribute file 222, a corresponding managed entity object type (300) is derived 408, optionally, the methods associated with the managed entity object type, parsed from the attribute file 222, are registered 410 and the corresponding .dll file 226 is loaded by the framework 200.

The attribute files 222, .dll files 226 and the .so files 232 may be stored in pre-specified locations known to the framework 200. Facilities may be provided for run-time loading 404 and processing 406 of a group (426) of the attribute files 222 as well as the loading and registration 234 of a group (428) of shared library (.so) files 232.

When all of the attribute files 222 have been loaded-up 404 and processed 406, the framework 200 is in a state 430 ready to provide the interworking function for the software applications 210.

Each software application 210, upon start-up 440 thereof, registers 218 with the framework 200 to participate in a distributed computing environment.

In accordance with the preferred embodiment of the invention, the framework 200 makes available the dictionary of operations and publishes a standard interface for the software applications 210 to interact with instances 206 of managed entity object types.

In accordance with the preferred embodiment of the invention, the single managed entity object class implements an "invoke" method used by each derived managed entity object type instance 206 to perform operations thereon. For example:
attributeValue invoke
( operationName, vector attributeValue parameters [, context ] ).

The "operationName" will be mapped to the corresponding functionName at run-time. Alternatively the invoke method need not be a method of the single managed entity object class but rather a free public function.

Each software application 210 preferably sends request messages 444 to the framework 200. Typically, the request messages 444 are used to invoke 442 an operation on at least one managed entity object type instance 206. The parameters needed are packaged in a prior step 441.

The framework 200, receiving the messages 444, extracts the name of the operation invoked and determines (431) whether the operation is implemented by the managed entity object type instance 206 on which the operation was invoked, by looking up the operationName in the dictionary of operations 330. In accordance with the invention, in looking the operation up in the dictionary 330, a most derived operation is considered, to provide the above mentioned polymorphic behavior.

The parameters are unpacked in step 432. The parameter unpacking includes consistency checks 433. The framework 200 determines whether the vector is of the correct size, whether the parameters are of the correct data types, etc. The "in" and "inout" parameter data type checks are the most relevant. Failing any of these checks, errors are reported and the invocation is terminated.

The operation is performed in step 434 by using the corresponding implementor function. The performed operation may return a value as well as "out" and "inout" parameters. Consistency checks 435 are performed on the return value, and the parameters. Errors are reported on finding any discrepancies. Else the parameters are packaged in step 436 and a response message 437 is sent back to the software application 210.

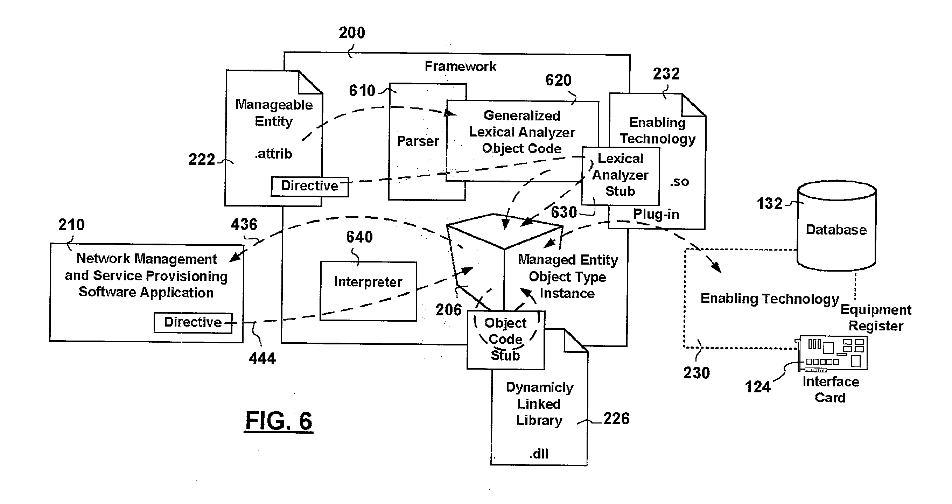

In accordance with the preferred embodiment of the invention, the interaction between the software applications 210 and the managed object type instances 206, changes the data network state and/or provides an update of the data network state by making use of the enabling technologies 230. The instantiation of the managed object types (300) is performed subsequent to the discovery of physical managed entities in the realm of influence of the network management and service provisioning solution. The discovery of physical managed entities is provided via software applications 210 such as the inventory reporting software application 214. The instantiation of managed entity object types may also be a result of the interaction of an analyst with the NMS 130 via the software applications 210. The instantiated manageable entity object types define a managed object type containment hierarchy 500 presented in FIG. 5.

The interaction between the software applications 210 and the managed object type instances 206, changes the data network state and/or provides an update of the data network state by making use of the enabling technologies 230.

FIG. 6 is a schematic diagram showing, in accordance with the preferred embodiment of the invention, the framework 200 facilitating the interaction between interworking software applications 210 and managed object type instances 206.

In accordance with the preferred embodiment of the invention, the attribute files 222 are parsed to lexically analyze directives specified therein. The framework 200 is provided with a generic lexicon analyzer 620 for interpreting directives. Besides deriving 408 manageable entity object types and specifying attributes, the directives are also used for specifying methods to be implemented by the managed entity object types in the hierarchy 300. A parser 610 is used for processing 406 attribute files 222.

In accordance with the preferred embodiment of the invention, a new grammar is introduced. The grammar enables the description in a corresponding attribute file 222 of: managed entity object types, their data members (e.g. attributes), relationships (inheritance et al.) and methods. The grammar is interpreted by the generic lexical analyzer 620 associated with the framework 200.

Further, the grammar enables access to the capabilities provided in a enabling technology plug-in 230. Special purpose lexical analyzer stubs 630 specific to each particular enabling technology plug-in 232 are also provided to implement multilevel language. Depending on an implementation used, each special purpose lexical analyzer 630 may be coded in the corresponding enabling technology plug-in shared library (.so) file 232 or coded separately and registered with the framework 200 via a separated shared library (.so) file 232. With the lexical analyzer stub 630 provided separately, the initial registration of each enabling technology plug-in 230 may include only the loading-up of the lexical analyzer stub 630; the remainder of the enabling technology plug-in 230 being only loaded-up on a need to use basis. Future information regarding the access to enabling technologies 230 capabilities is presented in the above mentioned co-pending patent application.

In accordance with the invention, the request messages 444 exchanged between the software applications 210 and the framework 200 are interpreted by an interpreter 640 associated with the framework 200 rather than making specific reference to manageable data network entities 220 or enabling technology plug-ins 230.

In accordance with the preferred embodiment of the invention, validation is performed in invoking methods of managed entity object types as mentioned above with respect to FIG. 4.

In accordance with the preferred embodiment of the invention, the network management and service provisioning solution is componetized to enable independent development, maintenance and troubleshooting of the software application 210 code, code associated with enabling technologies, as well as independent development, management, troubleshooting and deployment of new manageable data network entities 220.

The framework 200 therefore performs a facilitation function: each managed entity object type is loaded-up by the framework 200, parsed and its methods registered independently. The independence between manageable data network entities 220 and software applications 210 eliminates code interdependency therebetween and provides a run-time adaptable and extensible network management and service provisioning solution. There is no necessity to re-link and/or re-compile the framework 200 and/or software application 210 code to support new manageable data network entities 220 while streamlining software application implementation, deployment and maintenance. Therefore, the process of coding complex software applications is greatly simplified and streamlined, resulting in an increased productivity.

The software development methodology described herein provides for a dynamic addition of manageable data network entities 220 via human-readable attribute files 222 and optionally corresponding dynamically linked libraries .dll files 226. The attribute files 222 and the corresponding .dll files 226 may be modified or augmented, in parallel, to modify and/or augment the operation of the software applications 210. The software development methodology results in software application code that is easy to understand, debug, extend, test, and deploy while still being efficient when used in real time.

The software development methodology described herein further provides a mechanism to enable dynamic invocation of methods in a statically typed coding language thereby enabling a simplified single managed entity object class architecture to be used.

The embodiments presented are exemplary only and persons skilled in the art would appreciate that variations to the above described embodiments may be made without departing from the spirit of the invention. The scope of the invention is solely defined by the appended claims.

## Claims

1. Network management and service provisioning environment comprising a framework, the framework including:
**a.** an implementation of a single managed entity object class, the single managed entity object class being run-time derivable via type derivation into a hierarchy of managed entity object types minimizing the need to re-code and re-compile framework software application code in support of new managed entity object types;
**b.** a registry for run-time registration of at least one plug-in brokering access to network management and service provisioning enabling technologies;
**c.** a parser for processing at least one managed data network entity specification;
**d.** a dictionary holding a roster of function names of registered functions, the function defining methods associated with derived entity object types;
**e.** a generic lexical analyzer interpreting at least one directive; and
**f.** an interpreter for processing messages received from at least one network management and service provisioning software application
wherein a separation is achieved between managed entities, enabling technologies and software applications, the separation enabling independent development, maintenance and troubleshooting in providing network management and service provisioning solutions.

2. Network management and service provisioning environment as claimed in claim 1, wherein the derivation of the managed entity object type hierarchy includes the specification of at least one attribute.

3. Network management and service provisioning environment as claimed in claim 1 or claim 2, wherein the at least one managed data network entity specification includes a human-readable file.

4. Network management and service provisioning environment as claimed in claim 3, wherein the human-readable file is an attribute file holding attributes corresponding to a single managed entity object type.

5. Network management and service provisioning environment as claimed in any one of claims 1 to 4, wherein the at least one managed data network entity specification includes at least one implementation of at least one method associated therewith.

6. Network management and service provisioning environment as claimed in any one of claims 1 to 5, wherein the at least one directive includes an attribute specification.

7. Network management and service provisioning environment as claimed in claim 6, wherein the attribute specification further specifies managed entity object type inheritance.

8. Network management and service provisioning environment as claimed in any one of claims 1 to 7, wherein the network management and service provisioning enabling technologies include support for at least one of a persistence method and a persistence entity.

9. A network management and service provisioning environment as claimed in any one of claims 1 to 8, wherein the at least one directive further specifies a command sequence to be followed in using a specific registered enabling technology.

10. Network management and service provisioning environment as claimed in claim 9, wherein the framework further comprises at least one registered enabling technology specific lexical analyzer stub for interpreting at least one enabling technology specific directive.

11. Network management and service provisioning apparatus implementing the network management and service provisioning environment claimed in any one of claims 1 to 10.

12. Method of providing a network management and service provisioning solution comprising steps of:
**a.** registering with a framework at least one plug-in brokering access to at least one network management and service provisioning enabling technology;
**b.** parsing at least one managed data network entity specification loaded by the framework;
**c.** deriving a single managed entity object class into a managed entity object type hierarchy of managed entity object types via type derivation; and
**d.** processing at least one message received by the framework from at least one network management and service provisioning software application;
wherein the framework acts as an enabler by separating managed data network entities, enabling technologies and software applications, as well as a facilitator therebetween in providing the network management and service provisioning solution.

13. Method as claimed in claim 12, wherein processing the at least one message received by the framework, the method comprises a further step. of deriving a containment hierarchy of managed entity object type instances corresponding to field installed data network equipment.

14. Method as claimed in claim 12 or claim 13, wherein registering with the framework at least one plug-in, the method further comprises a step of run-time registering the at least one plug-in.

15. Method as claimed in claim 14, wherein run-time registering the at least one plug-in, the method further comprises a prior step of: selecting the at least one plug-in for registration thereof.

16. Method as claimed in any one of claims 12 to 15, wherein parsing the at least one managed data network entity specification loaded by the framework, the method further comprises a step of: run-time loading the at least one managed data network entity specification.

17. Method as claimed in claim 16, wherein run-time loading the at least one managed data network entity specification, the method further comprises a prior step of: selecting the at least one managed data network entity specification.

18. Method as claimed in any one of claims 12 to 17, wherein parsing, the method further comprises a step of: extracting at least one directive therefrom, the at least one managed data network entity specification being associated with at least one managed entity object type.

19. Method as claimed in any one of claims 12 to 18, wherein deriving a single managed entity object class via type derivation, the method further comprises a step of setting at least one attribute.

20. Method as claimed in any one of claims 12 to 19, wherein prior to processing the at least one message received by the framework from the at least one software application, the method further comprises a step of: registering the at least one software application with the framework.

21. Method as claimed in any one of claims 12 to 20, wherein processing the at least one message received by the framework; the method further comprises a step of: implementing a directive specified in the at least one managed data network entity specification using a lexical analyzer stub associated with the at least one plug-in.

22. Method as claimed in claim 21, wherein implementing the directive, the method further comprises a step of: instantiating managed entity object types.

23. Method as claimed in claim 21 or claim 22, wherein implementing the directive the method further comprises a step of: effecting a change in a network state of a managed data transport network in a realm of management.

24. Method as claimed in any one of claims 12 to 23, wherein subsequent to processing the at least one message received by the framework; the method further comprises a step of: sending a message to the software application.

25. Method as claimed in any one of claims 12 to 24, wherein parsing the at least one managed data network entity specification, the method further comprises a step of: registering at least one method associated with at least one derived managed entity object type.

26. Method as claimed in claim 25, wherein registering the at least one method associated with at least one derived managed entity object type, the method further comprises a step of: making a dictionary entry in a dictionary, the dictionary entry specifying a name associated with the registered method.

27. Method as claimed in claim 26, wherein making the dictionary entry in the dictionary, the method further comprises a step of using name spaces techniques to associate derived managed entity object types with corresponding registered methods.
